# EUROPÄISCHE PATENTANMELDUNG

(11) **EP 1 206 059 A2**
(43) Veröffentlichungstag der Anmeldung: **15.05.2002**
(21) Anmeldenummer: 01126714.3
(22) Anmeldetag: 08.11.2001
(51) Int. Cl.: H04J 3/16, H04J 3/06

(54) **Verfahren zur Übertragung von verketteten Datensignalen**

(30) Priorität: 13.11.2000 DE 10056220
(71) Anmelder: SIEMENS AKTIENGESELLSCHAFT, 80333 München (DE)
(72) Erfinder: Müller, Horst, 82069 Hohenschäftlarn (DE)

(57) **Zusammenfassung**

Ein STM-256/OC-768-Signal (DSA) wird in vier verkettete Signale (IMA1 bis IMA4) aufgeteilt, die in modifizierte STM-64/OC-192-Pulsrahmen (PR64.1 -PR64.4) eingefügt werden. Die Bytes der nicht genutzten Information (NU) und die Rahmenkennungswörter (A1, A2) des STM-256/OC-768-Signales werden nicht übertragen, so daß der um diese redundante Information verringerte gesamte Inhalt des STM-256/OC-768-Signales transparent in den modifizierten STM-64/OC-192-Pulsrahmen (PR64.1-PR64.4) übertragen werden kann. Die verketteten Signale können problemlos regeneriert werden.

## Beschreibung

Die Erfindung betrifft ein Verfahren zur Übertragung von Datensignalen nach dem Oberbegriff des Anspruchs 1.

In synchronen Datensystemen wie der synchronen digitalen Hierarchie, SDH, und einem entsprechenden in Nordamerika verwendeten System SONET werden binäre Daten in Pulsrahmen eingefügt und übertragen. Um mit Systemen, die nur eine beschränkte Übertragungskapazität aufweisen, auch Signale mit höheren Datenraten übertragen zu können, werden diese Signale in mehrere Teilsignale mit geringerer Datenrate aufgeteilt. Eine entsprechende Anordnung wird als "Inverser Multiplexer" beschrieben und ist beispielsweise aus der Europäischen Patentanmeldung EP 0 429 888 bekannt.

In naher Zukunft ist zu erwarten, daß es Geräte, beispielsweise Router geben wird, die STM-256/OC-768-Signale mit etwa 40 Gbit/s abgeben werden. In der optischen Übertragungstechnik sind zur Zeit noch Wellenlängen-Multiplexsysteme üblich, deren einzelnen Kanäle für Übertragungsraten von 10 Gbit/s konzipiert sind.

Aufgabe der Erfindung ist es, ein Verfahren anzugeben, das die Übertragung von STM-256/OC-768-Signalen über 10 Gbit/s-Kanäle ermöglicht.

Ein solches Verfahren ist in Anspruch 1 angegeben.

Vorteilhafte Weiterbildungen der Erfindung sind in den Unteransprüchen beschrieben.

Der Vorteil des erfindungsgemäßen Verfahrens liegt darin, daß zur Übertragung Pulsrahmen verwendet werden, die im wesentlichen einem genormten Pulsrahmen entsprechen. Lediglich die Anzahl der Rahmenkennungsbytes wird reduziert. Vorhandene Übertragungseinrichtungen brauchen deshalb nur geringfügig oder garnicht modifiziert zu werden. Der Pulsrahmen ist so gestaltet, daß die Arbeitsweise von elektrischen Regeneratoren nicht beeinträchtigt wird. Es kann daher ein einheitlicher Regeneratortyp im Netz vorgesehen werden. Das ursprüngliche Signal wird transparent übertragen.

Vorteilhaft ist auch eine Numerierung der verketteten Impulsrahmen. Hierdurch ist empfangsseitig ein einfaches Erkennen der Teilsignale und ein fehlerfreies Zusammenfassen zum ursprünglichen Signal möglich.

Um eine fehlerfreie Übertragung auch bei größeren Laufzeitunterschieden sicherzustellen, ist es vorteilhaft, einen Überrahmen zu bilden. Dies kann durch die Markierung von beispielsweise der ersten verketteten Pulsrahmen eines Überrahmens oder durch eine Numerierung aller verketteten Pulsrahmen eines Überrahmens erfolgen.

Ein Ausführungsbeispiel der Erfindung wird anhand von Figuren näher erläutert.

Es zeigen:
Figur 1 eine Anordnung zur Durchführung des erfindungsgemäßen Verfahrens und
Figur 2 die Rahmenstruktur der verketteten Pulsrahmen.

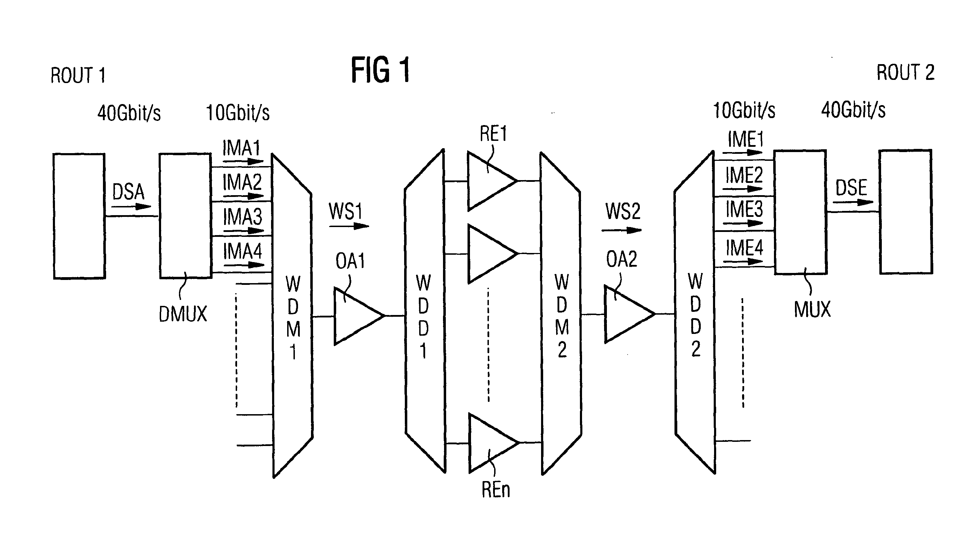

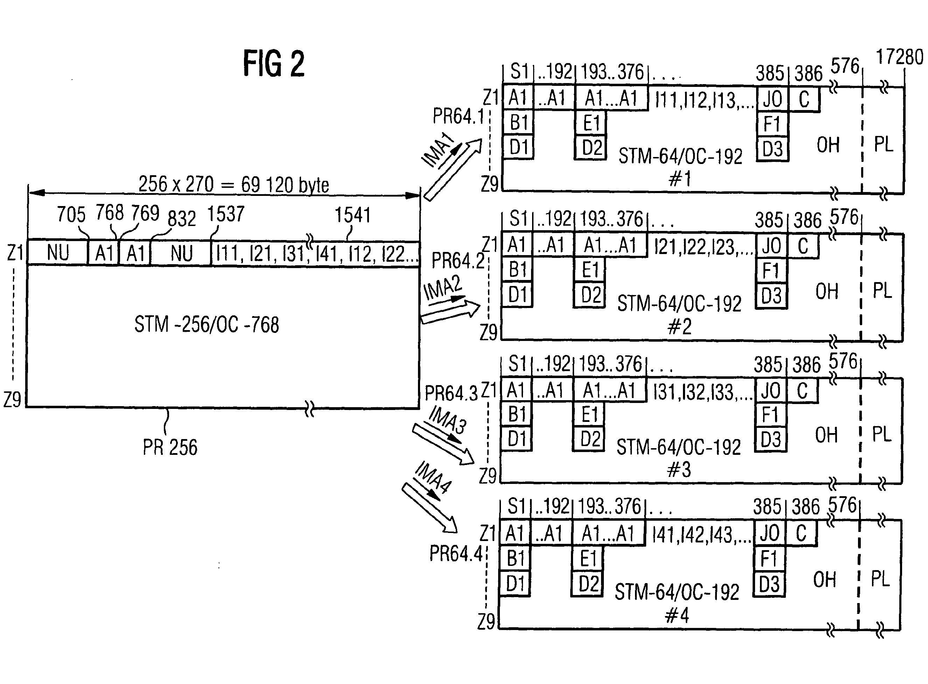

**Figur 1** zeigt eine Einsatzmöglichkeit des erfindungsgemäßen Verfahrens. Von einem ersten Router ROUT1 wird ein STM-256/OC-768-Signal DSA, in einen Pulsrahmen PR256 (Fig. 2) eingefügt, mit einer Bitrate von ca. 40 Gbit/s abgegeben. In einem Demultiplexer DMUX (Inverser Demultiplexer) wird dieses Signal nach dem Weglassen der Bytes NU, A1, A2, NU entsprechend **Figur 2** byteweise in vier verkettete Teilsignale IMA1 bis IMA4 aufgeteilt, so daß die Bytes I11, I21, I31, I41, I12, I22, ... des ursprünglichen 256/OC-768-Signal DSA gleichmäßig den Pulsrahmen PR64.1 bis PR 64.4 zugeteilt werden.

Die genaue Struktur der Pulsrahmen STM-64 / OC-192 ist in der ITU-Recommendation G.707, Seite 42 und Seiten 54 und 55 beschrieben. Die hier verwendeten Pulsrahmen PR64.1 bis PR 64.4 entsprechen im Format völlig und inhaltlich weitgehend denen der STM-64/OC-192-Pulsrahmen, wie dies in der rechten Hälfte der Figur 2 dargestellt ist. Die Darstellung ist nicht maßstabsgerecht. Jeder dieser Pulsrahmen weist neun Zeilen Z1 bis Z9 und 17.280 Spalten S1, S2, ... auf, die so gebildeten Zeitschlitze nehmen jeweils ein Byte auf. Der ITU-mäßige Overhead der Pulsrahmen PR64.1 bis PR 64.4 weist jeweils 576 Spalten auf. Der "traditionelle Overhead" umfaßt 576 Spalten.

In der ersten Zeile jedes Pulsrahmens PR64.1 bis PR 64.4 werden Rahmenkennungen A1 und A2 übertragen, wobei die Anzahl der A2-Bytes um 8 Bytes verringert wurde und die Rahmenkennungsbytes A2 durch Informationsbytes I11, I12, ... ersetzt wurden. Nur 384 Zeitschlitze sind für die Overheadinformation OH reserviert; in den übrigen Zeitschlitzen werden wie auch in der (ursprünglichen) Payload PL Daten jeweils eines Teilsignals bzw. des STM-256/OC-768-Signal DSA1 übertragen.

Das erste Nutzsignalbyte 1537 des STM-256/OC-768-Signals bzw. das erste Byte des Teilsignals IMA1 wird im ersten STM64/OC-192-Pulsrahmen PR64.1 als Byte I11 an Position 377 eingefügt; das an Position 1538 stehende Nutzsignalbyte 1538 des STM-256/OC-768-Signals bzw. das erste Byte des Teilsignals IMA2 wird als Byte I21 an Position 377 des zweiten STM64/OC-192-Pulsrahmens PR64.2 eingefügt usw. bis das Byte von Position 1541 wieder als Byte I12 an Position 378 des ersten Pulsrahmens PR64.1 eingefügt wird usw. Weitere Bytes des Signals IMA1 werden in der ersten Zeile Z1 ab Spalte 379 bis Spalte 384 und wieder ab Spalte 387 usw. des Pulsrahmens PR64.1 eingefügt. Anschließend werden weitere Bytes des Teilsignals IMA1 in der zweiten Zeile ab Spalte 2 bis Spalte 192, ab Spalte 194 bis Spalte 394 und ab Spalte 386 eingefügt, wie aus Figur 2 ersichtlich ist.

Die in Figur 1 dargestellten Regeneratoren RE1 bis RE4 werten nur die Übergänge zwischen A1 und A2 zur Synchronisation aus, so daß die Reduktion der Anzahl der A2 Bytes die Funktion nicht beeinträchtigt. Die Reduktion der Anzahl der Rahmenkennungsbytes ist notwendig, da insgesamt aus dem Pulsrahmen PR256 9 x 69.120 - 1536 Bytes = 620 544 Bytes in die vier Pulsrahmen PR64.1 bis PR64.4 einzufügen sind und außerdem noch jeweils acht zusätzliche Bytes J0, C, B1, E1, F1, D1, D2, D3 in den Overhead eingefügt werden müssen, um einen kompatiblen "STM-64/OC-192"-Pulsrahmen zu erzeugen. Die den verketteten Teilsignalen IMA1 bis IMA4 zugeordneten Signale STM-64/OC-192 sind zusätzlich mit #1 bis #4 gekennzeichnet.

Im Prinzipschaltbild **Figur 1** werden die verketteten Signale IMA1 bis IMA4 zusammen mit weiteren Signalen in einem ersten Wellenlängen-Multiplexer WDM1 zu einem Übertragungssignal WS1 zusammengefaßt und übertragen. Die Übertragungstrecke enthält in der Regel optische Verstärker OA1 und elektrische Regeneratoren RE1 bis REn. Zur Regeneration ist zunächst (noch) eine Aufteilung des Übertragungssignals durch einen ersten Wellenlängen-Demultiplexer WDD1 in die entsprechenden 10 Gbit/s-Signale und anschließend eine hier nicht dargestellte optoelektrische Umsetzung erforderlich. Nach der Regeneration der Signale erfolgt eine elektro-optische Umsetzung und die Zusammenfassung in einem zweiten Wellenlängen-Multiplexer WDM2 zum Übertragungssignal WS2, das über einen weiteren optischen Verstärker OA2 zu einem zweiten Wellenlängen-Demultiplexer WDD2 weitergesendet wird, wo es in verkettete Teilsignale IME1 bis IME4 rückumgesetzt wird, die den sendeseitigen Teilsignalen IMA1 bis IMA4 entsprechen.

Im Multiplexer MUX wird jeweils der im Demultiplexer eingefügte Regenerator Section Overhead, die Bytes J0, C, B1, E1, F1, D1, D2, D3 der verketteten Signale, entfernt und die Teilsignale werden in den entsprechenden Pulsrahmen PR256 "eingemappt" und wieder als STM-256/OC-768-Signal DSE einem zweiten Router ROUT2 zugeführt.

Um die Pulsrahmen identifizieren zu können, ist es zweckmäßig, eine Numerierung vorzunehmen, die im Byte C erfolgt. Außerdem kann eine Überrahmenkennung, dies kann eine spezielle Binärkombination sein, im C-Byte übertragen werden. Ebenso ist es möglich, die Durchnumerierung auf den Überrahmen auszudehnen. Durch diese Maßnahmen können auch Laufzeitunterschiede, die größer als eine halbe Rahmenperiode sind, erkannt und durch Pufferspeicher im Multiplexer MUX ausgeglichen werden. Für die Signalübertragung in Rückrichtung ist eine analoge Einrichtung vorgesehen.

## Patentansprüche

1. Verfahren zur Übertragung eines Datensignals (DSA) mit hoher Bitrate durch Aufteilen in vier verkettete Signale (IMA1, IMA2, IMA3, IMA4) niedrigerer Bitrate,
**dadurch gekennzeichnet,**
**daß** ein STM-256/OC-768-Datensignal (DSA) unter Entfernung von nicht genutzten Bytes des Overheads (NU) und der Rahmenkennungsbytes (A1, A2) in vier verkettete Teilsignale (IMA1, IMA2, IMA3, IMA4) byteweise aufgeteilt wird,
**daß** modifizierte STM-64/OC-192-Pulsrahmen (PR64.1 bis PR64.4), die eine reduzierte Anzahl von Rahmenkennungsbytes (A1, A2) aufweisen, gebildet werden, in die die Teilsignale (IMA1, IMA2, IMA3, IMA4) eingefügt werden,
**daß** in jeden modifizierten STM-64/OC-192-Pulsrahmen (PR64.1 bis PR64.4) anstelle von nicht mehr übertragenen Rahmenkennungsbytes (A1, A2) eine entsprechende Anzahl von Bytes jeweils eines der Teilsignale (IMA1, IMA2, IMA3, IMA4) eingefügt werden und die übrigen Bytes des jeweiligen Teilsignals (IMA1, IMA2, IMA3, IMA4) in nicht genutzten Zeitschlitze des Overheads (OH) und der Payload (PL) der modifizierten STM-64/OC-192-Pulsrahmen (PR64.1 bis PR64.4) eingefügt werden,
**daß** die Teilsignale (IMA1, IMA2, IMA3, IMA4) übertragen werden und
**daß** die Teilsignale (IMA1, IMA2, IMA3, IMA4) empfangsseitig wieder zu einem empfangsseitigen STM-256/OC-768-Datensignal (DSE) zusammengefügt werden.

2. Verfahren nach Anspruch 1,
**dadurch gekennzeichnet,**
**daß** im Overhead der modifizierten STM-64/OC-192-Pulsrahmen (PR64.1 bis PR64.4) jeweils maximal 384 Bytes nicht für die Übertragung von Daten eines der Teilsignale (IMA1 bis IMA4) zur Verfügung stehen.

3. Verfahren nach Anspruch 1 oder 2,
**dadurch gekennzeichnet,**
**daß** die STM-64/OC-192-Pulsrahmen (PR64.1 bis PR64.4) außer den Rahmenkennungsbytes (A1, A2) weitere acht Overheadbytes (J0, C, B1, E1, F1, D1, D2, D3) enthalten.

4. Verfahren nach Anspruch 1, 2 oder 3,
**dadurch gekennzeichnet,**
**daß** sämtliche nicht benötigten 1536 Bytes (NU, A1, A2, NU) der Daten des STM-256/OC-768-Datensignals (DAS) entfernt werden,
**daß** die Anzahl der Rahmenkennungsbytes (A1, A2) der STM-64/OC-192-Pulsrahmen (PR64.1 bis PR64.4) um mindestens acht Bytes verringert wird und daß an Stelle dieser Bytes die Datenjeweils eines Teilsignals (IMA1 bis IMA4), beginnend mit dem 1537sten Byte des STM-256/OC-768-Signals, übertragen werden.

5. Verfahren nach einem der vorhergehenden Ansprüche,
**dadurch gekennzeichnet,**
**daß** die STM-64/OC-192-Pulsrahmen (PR64.1 bis PR64.4) mit einer Numerierung versehen werden.

6. Verfahren nach Anspruch 5,
**dadurch gekennzeichnet,**
**daß** ein Überrahmen mit einem ganzzahligen Vielfachen von vier STM-64/OC-192-Pulsrahmen (PR64.1 bis PR64.4) gebildet wird.

7. Verfahren nach Anspruch 5 oder Anspruch 6,
**dadurch gekennzeichnet,**
**daß** die Numerierung in einem C-Byte jedes STM-64/OC-192-Pulsrahmen (PR64.1 bis PR64.4) übertragen wird.

8. Verfahren nach Anspruch 5 oder 6,
**dadurch gekennzeichnet,**
**daß** eine Markierung des Beginns des Überrahmens im C-Byte jedes STM-64/OC-192-Pulsrahmen (PR64.1 bis PR64.4) übertragen wird.
